# EUROPÄISCHE PATENTSCHRIFT

(11) **EP 1 057 144 B1**
(45) Veröffentlichungstag und Bekanntmachung des Hinweises auf die Patenterteilung: **21.04.2004**
(21) Anmeldenummer: 99913080.0
(22) Anmeldetag: 12.02.1999
(51) Int. Cl.: G07C 9/00, G06K 19/16, B42D 15/10, G07F 7/08

(54) **ZUGANGSBERECHTIGUNGS- ODER IDENTIFIKATIONSMEDIUM UND VERFAHREN ZU SEINER HERSTELLUNG**
ACCESS AUTHORIZATION OR IDENTIFICATION MEDIUM AND METHOD FOR THE PRODUCTION OF THE SAME
MOYEN D'AUTORISATION D'ACCES OU D'IDENTIFICATION ET PROCEDE PERMETTANT DE LE REALISER

(30) Priorität: 16.02.1998 DE 19806295
(43) Veröffentlichungstag der Anmeldung: 06.12.2000
(73) Patentinhaber: Fraunhofer-Gesellschaft zur Förderung der angewandten Forschung e.V., 80686 München (DE)
(72) Erfinder: SCHÖNHUT, Jürgen, D-64342 Seeheim-Jugenheim (DE); FRITZ, Haimo, D-64331 Weiterstadt (DE); CROCE FERRI, Lucilla, D-64342 Seeheim-Jugenheim (DE)
(74) Vertreter: Gagel, Roland, Dr.
(86) Internationale Anmeldenummer: PCT/DE1999/000436
(87) Internationale Veröffentlichungsnummer: WO 1999/041708

(56) Entgegenhaltungen:
- EP-A- 0 600 646
- EP-A- 0 618 543
- EP-A- 0 730 243
- GB-A- 2 143 980
- US-A- 3 894 756
- US-A- 4 921 278
- US-A- 5 396 559
- SWEATT W C ET AL: "Mass-producible microtags" OSA TRENDS IN OPTICS AND PHOTONICS. VOL.4 EXTREME ULTRAVIOLET LITHOGRAPHY. FROM THE TOPICAL MEETING, PROCEEDINGS OF EXTREME ULTRAVIOLET LITHOGRAPHY (ISBN 1 55752 435 1), BOSTON, MA, USA, 1-3 MAY 1996, Seiten 212-214, XP002108387 ISBN 1-55752-435-1, 1996, Washington, DC, USA, Opt. Soc. America, USA
- B. R. BROWN, A. W. LOHMAN: "Complex Spatial Filtering with Binary Masks" APPLIED OPTICS,1966, Seiten 967-970, XP002108920 in der Anmeldung erwähnt

## Beschreibung

Die vorliegende Erfindung betrifft ein Zugangsberechtigungs- oder Identifikationsmedium für die Zugangs-, Zutritts- oder Berechtigungskontrolle und ein Verfahren zur Herstellung des Mediums. Des weiteren bezieht sich die Erfindung auf ein Verfahren zur Identifizierung oder Überprüfung der Zugangsberechtigung einer Person mit Hilfe des Mediums.

Bei der Erfindung erfolgt die Zugangs-, Zutritts- oder Berechtigungskontrolle durch automatische Benutzerauthentifizierung mit Hilfe von computergenerierten Hologrammen.

In allen sensiblen Bereichen von Forschungs-, Industrieund Energie-Versorgungseinrichtungen sind kosten- und zeitaufwendige Sicherheits- bzw. Zugangs- oder Berechtigungskontrollen notwendig und erforderlich. Das Gleiche gilt bei der Überprüfung von Berechtigungsausweisen (z.B. Führerschein) und Identifikationsausweisen (EC-Karten, Personalausweise, Pässe usw.).

Die wesentlichen Möglichkeiten zur Identifikation einer Person bestehen im Abfragen von Wissen, d.h. Authentifizierung mit Hilfe von Erkennungs- bzw. Passwörtern, sowie im Vorzeigen von Ausweis- und Berechtigungsmedien. Auch Kombinationen der beiden Identifikationsmöglichkeiten werden eingesetzt.

Die Identität einer Person kann durch Vorzeigen eines bestimmten Gegenstandes, der ihn selbst als Individuum oder als zu einer bestimmten Gruppe gehörig ausweist, erfolgen. Die Eigenschaften, die für diesen Zweck der Identifizierung verwendet werden, bezeichnet man als Erkennungs- bzw. Authentikationsmerkmale. So kann beispielsweise ein Führerschein als Authentikationsdokument bezeichnet werden, weil damit die Identität des Fahrers überprüft werden kann.

Neben einer Identifikation durch eine Person, die die Erkennungsmerkmale überprüft, besteht auch die Möglichkeit einer automatischen Identifizierung. Erkennungsmerkmale, die für eine automatische Identifizierung benutzt werden, sind so auf dem Ausweis- oder Berechtigungsmedium codiert, daß sie mit Hilfe eines Decodierungsprogramms die Identität bzw. die Berechtigung des Besitzers bestätigen. Da die Information auf einem Ausweismedium zur Identifizierung ihres Trägers dient, muß die Information gegen Duplizieren und Veränderung geschützt werden.

Seit langem werden biometrische Eigenschaften wie Paßbilder und Fingerabdrücke zur Identifizierung benutzt, so z.B. beim Paß, dem Personalausweis, dem Führerschein oder bei Erfassungen im Polizeibereich.

Die biometrische Authentikation benutzt eindeutige biologische Eigenschaften, um eine Person zu identifizieren. Dieser biometrische Identifizierungsmechanismus muß so konzipiert sein, daß er die Person eindeutig identifizieren kann. Die Erkennungsfähigkeit basiert hierbei auf physischen oder verhaltenscharakteristischen Eigenschaften. Die derzeit nutzbaren physischen Eigenschaften für biometrisch basierte Erkennungssysteme sind Fingerabdruck, Gesichtserkennung und Netzhautabtastung. Verhaltenscharakterliche Erkennungssysteme können auf Stimmerkennung in Verbindung mit Mundbewegungen oder auf Unterschriftenerkennung anhand der Schreibdynamik (Gewicht, Geschwindigkeit, Zeit, Winkel, Breite, Länge) basieren.

Bei der biometrischen Authentikation muß zuerst jeder Benutzer durch einen Systemadministrator eingetragen werden, wodurch er automatisch als authorisierter Benutzer verifiziert wird. Bei dieser Registrierung wird eine biometrische Eigenschaft gespeichert, mit der sich der Benutzer identifizieren kann. Im Fall von Fingerabdrücken als biometrische Eigenschaft ist bekannt, diese als optisches Hologramm zu speichern, da die Feststellung einer Übereinstimmung mit dem Fingerabdruck des Benutzers unter Einsatz holographischer Mittel vereinfacht werden kann.

Die meisten Ausweismedien benötigen eine elektronische Schnittstelle, um mit der Prüfelektronik zu kommunizieren. Diese Schnittstelle wird allgemein als Schreib- und Lesegerät bezeichnet, da sie sowohl Daten von einem Medium lesen, als auch auf das Medium schreiben kann.

Für eine spezielle Anwendung ist diese Kombination von Ausweismedien mit Schreib- und Lesegeräten ein wichtiger Faktor für die Effektivität und den Preis eines solchen Systems. Abhängig von der Wichtigkeit des geschützten Bereiches sollte die Sicherheitsanforderung des Schutzmechanismus festgelegt werden. Benötigt man beispielsweise viele einfache Ausweismedien bei gleichzeitig geringer Anzahl an Schreib- und Lesegeräten, so werden die Kosten von intelligenteren Schreib- und Lesegeräten durch die billigen Ausweismedien kompensiert, wie dies beispielsweise bei Parkhausautomaten der Fall ist.

Die Verwendungsmöglichkeiten von Ausweismedien reichen von einfacher Datenspeicherung bis hin zur Implementierung von komplizierten kryptographischen Authentifizierungsprotokollen.

Alle Ausweismedien müssen in der Lage sein Information zu speichern, mit der sie sich oder den Besitzer gegenüber einem Kontrollsystem identifizieren können. In Anwendungen, die keine hohen Sicherheitsstandards erfordern, kann die Identifizierung beispielsweise durch Löcher in einer Plastikkarte erfolgen, die in einem bestimmten Muster angeordnet sind. Das Kontrollsystem für solch ein Ausweismedium vergleicht das Muster einfach mit allen Mustern, die an diesem Tag gültig sind, und trifft eine entsprechende Entscheidung. Ein solches System ist jedoch relativ einfach zu überlisten, da in der Regel immer gleiche Muster zu bestimmten Zeiten abgefragt werden. Aus diesem Grund erfordern Systeme, die auf physikalischer Mustererkennung beruhen, einen häufigen Wechsel des Erkennungsmusters und dadurch bedingt ein häufiges Austauschen der Ausweismedien, um wenigstens einen geringen Fälschungsschutz zu bieten. Identifizierungsmedien höherer Entwicklungsstufen bieten weitaus bessere Fälschungssicherheit. Der Preis solcher Systeme steigt jedoch überproportional mit ihren Fähigkeiten.

Vom Sicherheitsstandpunkt aus gesehen liegt die Stärke von Ausweismedien, die Informationen zur Identifizierung enthalten, in ihrer Portabilität. Außerdem bleibt die (persönliche) Identifizierungsinformation im Besitz des rechtmäßigen Inhabers.

Die größte Bedrohung der Sicherheit solcher Systeme besteht darin, daß jemand ein gültiges Ausweismedium entwendet und sich somit unter einer anderen Identität Zugang, Zutritt oder Berechtigung verschafft. Systemerfahrene Personen sind auch in der Lage, ein Zugangs-, Zutritts- oder Berechtigungsmedium zu fälschen.

Diese Sicherheitsprobleme können reduziert werden, wenn zur Identifikation ein Passwort oder eine PIN eingegeben werden muß. Es darf auch nur eine bestimmte Anzahl an Versuchen zugelassen werden, um die richtige PIN einzugeben. Ohne Passwort oder PIN sollte ein gefälschtes Ausweismedium keinen Zutritt bzw. Zugang erlauben. Dadurch kann die Sicherheit signifikant erhöht werden, weil die Identität durch Daten verifiziert werden muß, die normalerweise nur der rechtmäßige Besitzer des Ausweismediums kennt.

Die Systeme sind in der Regel so ausgestaltet, daß bei Bekanntwerten des Passwortes oder der PIN gegenüber Unbefugten nur Zugriff auf die Daten des entsprechenden Besitzers ermöglicht wird, nicht aber auf die Daten aller Benutzer des gesamten Systems, wie es beispielsweise bei kryptographischen Verfahren nach der Entschlüsselung des Codierungsalgorithmus möglich ist.

Zusammenfassend weisen die bekannten Zugangs-, Zutrittsoder Berechtigungsmedien zahlreiche Nachteile auf. Bei nichtpersonalisierten Sicherheitsmerkmalen ist ein Austausch bzw. eine Fälschung von Informationen und Daten auf dem Zugangsberechtigungsmedium verhältnismäßig leicht möglich, ohne seine Gültigkeit zu beeinträchtigen oder zu zerstören.

Weiterhin besteht bei den bekannten Medien mit Magnetstreifen eine hohe Anfälligkeit bezüglich der Datenzerstörung durch elektromagnetische Felder. Dies bedeutet einen Verlust der Verfügbarkeit. Außerdem können die Daten mit einem handelsüblichen Schreib/Lesegerät leicht verändert werden.

Bei Chipkarten kann eine Zerstörung durch statische Aufladung erfolgen. Auch das bedeutet einen Verlust der Verfügbarkeit. Mit geeigneten Mitteln kann auch eine unbefugte Benutzung, d.h. Auslesen von geheimen Daten bzw. Programmierung und Änderung von Daten, vorgenommen werden.

Aus der EP-A-0730243 ist ein Verfahren bekannt, bei dem aus bestimmten Eigenschaften einzelner Punkte eines Bildes auf dem Identifikationsmedium eine Signatur zur Verifizierung der Originalität des Bildes erzeugt und auf dem Medium gespeichert wird. Eine Rekonstruktion des Bildes ist mit diesen Signatur-Daten allerdings nicht möglich, da nur ein Bruchteil der Anzahl der Bildpunkte des Bildes in der Signatur verschlüsselt ist. Es handelt sich vielmehr um ein Verfahren, das dem Themengebiet der Signatur von Daten zuzuordnen ist.

Die EP-A-0600646 beschreibt ein weiteres Verfahren zur Erhöhung der Fälschungssicherheit eines Textdokumentes. Bei diesem Verfahren wird ein Abtastbild des Dokumentes erzeugt und als verschlüsselter Code auf dem Dokument selbst oder einem beigefügten Etikett gespeichert. Zur Kodierung wird Fax Group III verwendet, eine 1 Bit Kodierung, die allerdings für Dokumente mit Bildern aufgrund des enormen Platzbedarfs gänzlich ungeeignet ist.

Die Druckschrift EP-A-0618543 beschreibt ein Identifikationssystem für Personen, bei dem bei sichtbarem Licht für das menschliche Auge nicht erkennbare Kennzeichnungen auf ein Identifikationsmedium aufgebracht werden. Bei diesen Kennzeichnungen handelt es sich beispielsweise um ein synthetisch erzeugtes Hologramm eines Passbildes einer Person. Dieses Bild wird in digitaler Form zur Verfügung gestellt und einer Integraltransformation unterworfen. Die Daten der Transformierten werden als Ansteuersignale eines die Oberfläche des Roh-Identifikationsmediums bestrahlenden, im tiefen UV-Bereich arbeitenden, Excimer-Lasers zugeführt. Die Strahlung des Lasers wird in zwei Teilstrahlen aufgespalten, von denen der eine als Referenzstrahl zur Erzeugung eines Flächenhologrammes dient und der andere über die Ansteuersignale als Pseudoobjektstrahl mit den Transformierten intensitätsmoduliert wird. Auf diese Weise wird ein Flächenhologramm des Bildes als latentes Bild in die Oberfläche des Identifikationsmediums eingeprägt, ohne an der Oberfläche sichtbare oder spürbare Veränderungen hervorzurufen. Zum Auslesen dieser Informationen ist dann wiederum eine für den Wellenlängenbereich des zum Schreiben des Hologrammes benutzten Lasers ausgelegte spezielle UV-Beleuchtungsoptik erforderlich. Durch diese Technik soll insbesondere erreicht werden, dass ein potentieller Fälscher des Identifikationsmediums die zusätzlichen Kennzeichnungen nicht ohne weiteres wahrnehmen und zudem nicht ohne Benutzung hochentwickelter technischer Hilfsmittel verändern kann. Die Technik zum Einbringen dieser Zusatzinformationen, d.h. des synthetischen Hologrammes als Flächenhologramm in das Identifikationsmedium, ist jedoch sehr aufwendig und teuer, da hierfür ein Objekt- und ein Referenzstrahl geeignet erzeugt werden müssen. Weiterhin muß das Material des Identifikationsmediums die Einbringung eines derartigen Hologrammes ermöglichen, insbesondere hochempfindliches holographisches Filmmaterial enthalten.

Bei Systemen mit hoher Fälschungssicherheit, die personalisierte Sicherheitsmerkmale, wie beispielsweise den Fingerabdruck verwenden, muß vorher von jeder zugangsberechtigten Person ein Fingerabdruck genommen werden. Diese Maßnahme wirkt jedoch in unserem Kulturkreis eher abschreckend, da auf diese Weise in der Regel nur straffällig gewordene Personen erfaßt werden. Weiterhin ist in der Regel zusätzlich eine Datenbank notwendig, die zum Speichern der Fingerabdrucke der Benutzer erstellt werden muß.

Ausgehend von dem bekannten Stand der Technik liegt der Erfindung die Aufgabe zugrunde, ein Zugangsberechtigungsoder Identifikationsmedium sowie ein Verfahren zu dessen Herstellung anzugeben, das einen hohen Sicherheitsstandard und eine hohe Fälschungssicherheit aufweist und auf einfache und kostengünsitge Weise herstellbar ist.

Die Erfindung wird mit den Merkmalen der Patentansprüche 1 und 8 gelöst. Patentanspruch 9 gibt eine Anwendung des Zugangsberechtigungsmediums zur Identifizierung oder Überprüfung der Zugangsberechtigung einer Person an.

Die Erfindung beruht auf der Idee einer automatischen oder visuellen Benutzeridentifizierung mit Hilfe eines auf computergenerierter Holographie basierenden Systems. Mit diesem System kann eine Fälschung bzw. unbefugte Veränderung des Zugangsberechtigungsmediums und damit ein Verlust seiner Integrität nahezu ausgeschlossen und die mißbräuchliche Verwendung des Mediums verhindert werden.

Das erfindungsgemäße Zugangsberechtigungs- oder Identifikationsmedium trägt auf seiner Vorderseite ein Bild des Gesichtes der Person, die durch das Medium identifiziert werden, oder der durch das Medium Zugang zu einem geschützten Bereich verschafft werden soll. Auf dem Medium ist weiterhin die computergenerierte holographische Information des Bildes als Beugungsmuster codiert aufgedruckt.
Unter codierter Form wird hierbei die konkrete Darstellungsart der holographischen Information, d.h. der als komplexe Funktionen vorliegenden Amplituden- und Phaseninformation des Bildes, gesehen. Diese Darstellungsart muß für eine Speicherung auf dem Medium geeignet sein.

Durch diese Ausgestaltung des Zugangsberechtigungs- oder Identifikationsmediums läßt sich jederzeit die Konsistenz der darauf befindlichen Daten prüfen. So kann mit einem geeigneten Lesegerät die in codierter Form gespeicherte holographische Information ausgelesen und daraus das Bild rekonstruiert werden. Ein Vergleich des rekonstruierten Bildes mit dem Bild auf der Vorderseite zeigt, ob diesbezüglich Manipulationen am Zugangsberechtigungs- oder Identifikationsmedium vorgenommen wurden. Es ist damit nahezu ausgeschlossen, daß Teile der Information des Mediums geändert werden, ohne daß es bei der Benutzung bzw. Überprüfung auffallen würde. So kann beispielsweise das Photo nicht ausgetauscht oder manipuliert werden.

Nach Überprüfung der Konsistenz der Daten kann durch einen Vergleich des Bildes mit dem Träger des Mediums eine visuelle Identitätsüberprüfung stattfinden. Dies kann durch eine dafür vorgesehene Person erfolgen, die prüft, ob das Gesicht der zu authentifizierenden Person zum Photo auf dem Medium paßt.

Die Überprüfung der Konsistenz der Daten wie auch die Identitätsüberprüfung können auch automatisch unter Verwendung von Video- oder CCD-Kameras und Bilderkennungsund Bildvergleichsalgorithmen durchgeführt werden.

Das Zugangsberechtigungs- oder Identifikationsmedium ist mit geringfügigen Änderungen in mehreren Sicherheitsstufen einsetzbar. So kann zusätzlich eine automatische Identitätsüberprüfung des Besitzers des Zugangsberechtigungsoder Identifikations-mediums mit Hilfe einer PIN- oder Passwort-eingabe erfolgen. Die eingegebene PIN oder das Passwort werden mit der PIN oder dem Passwort verglichen, das zusätzlich auf dem Zugangsberechtigungs- oder Identifikationsmedium codiert gespeichert ist. So kann beispielsweise vor der Speicherung auf der Karte die holographische Information der PIN zusammen mit der holographischen Information des Bildes berechnet werden.

Der entscheidende Vorteil des erfindungsgemäßen Zugangsberechtigungs- oder Identifikationsmediums besteht darin, daß es nahezu unmöglich ist, die Daten oder Informationen auf dem Medium zu verändern oder zu fälschen, ohne daß dies bei der Zugangs-, Zutritts- oder Berechtigungskontrolle auffallen würde.

Ein weiterer Vorteil gegenüber bestehenden Systemen liegt neben der hohen Fälschungssicherheit in den gleichzeitig verhältnismäßig günstigen Erstellungs-, Wartungs- und Betriebskosten. So ist lediglich ein Paßfoto neueren Datums der Person notwendig, die eine Zugangsberechtigung erhalten soll, um damit ein entsprechendes Zugangsberechtigungs- oder Identifikationsmedium zu erstellen.

Es können auch weitere persönliche Daten, wie eine zusätzliche PIN oder Codewörter bzw. Passwörter, optisch zusammen mit dem Bild verschlüsselt werden. Diese Daten können nach dem Auslesen und Rekonstruieren abgefragt oder verglichen werden. Mit entsprechendem Personal kann auch ein visueller Vergleich des Bildes auf dem Zugangsberechtigungsoder Identifikationsmedium, mit dem verschlüsselten Bild und der sich damit ausweisenden Person vorgenommen werden.

Aufgrund des vorzugsweise optischen Speicher- und Ausleseverfahrens muß keine Zerstörung der Daten durch elektromagnetische Felder oder statische Entladungen befürchtet werden. Es gibt keine Kontaktprobleme beim Auslesen von Informationen. Weiterhin gibt es keine handelsüblichen Auslesegeräte, wie beispielsweise bei Magnetstreifenkarten, so daß ein unbefugtes Auslesen der auf dem Medium gespeicherten Information kaum möglich ist.

Die computergenerierte holographische Information des Bildes wird als Beugungsmuster bzw. Beugungsgitter codiert auf Vorder- und/oder Rückseite des Mediums aufgedruckt. Das Medium kann hierbei die Form einer Scheckkarte aufweisen.

In einer möglichen Ausgestaltung basiert das System auf einem Paßfoto, das als Beugungsmuster der computergenerierten holographischen Information auf dem Identifikationsmedium codiert und eventuell zusätzlich verschlüsselt wird. Die zusätzliche Verschlüsselung kann mit einem beliebigen, für die vorliegende Anwendung geeigneten VerschlüsselungsverEahren durchgeführt werden. Eine Verschlüsselung ist jedoch nicht unbedingt notwendig. Die nachfolgenden Ausführungen beziehen sich daher auf eine unverschlüsselte Codierung.

Außer dem Paßfoto können auch persönliche Daten, wie Adresse oder Geburtstag, mit in dem Beugungsmuster gespeichert werden.

Das Paßfoto als biometrisches Merkmal ist der Hauptbestandteil des Authentifizierungsmechanismus. Dieser kann auch, wie oben erwähnt, durch weitere Stufen verbessert werden, indem beispielsweise zusätzlich PINs (personal identification number) oder Codewörter mit in das Beugungsmuster des Hologramms codiert werden.

Der Benutzer erhält so ein Identifikationsmedium, beispielsweise in Form einer Karte, auf dem in codierter Form ein Paßfoto, personenspezifische Daten sowie eine PIN oder ein Codewort enthalten sind.

Möchte dieser Benutzer nun Zugang, Zutritt oder Berechtigung zu oder für einen geschützten Bereich erhalten, so muß er zunächst das Zugangsberechtigungs- oder Identifikationsmedium einem entsprechenden Mediumleser zuführen, der Zugriff auf den Decodierungsalgorithmus hat. Der Benutzer muß außerdem seine PIN oder sein Codewort eingeben.

Der Leser scannt das Beugungsmuster des Identifikationsmediums und aktiviert den Decodierungsalgorithmus. Mit Hilfe dieses Decodierungsalgorithmus wird eine computergenerierte Rekonstruktion der Information, die sich als Hologramm in codierter Form auf dem Ausweismedium befindet, erzeugt. Ein Teil der rekonstruierten Information wird jetzt beispielsweise mit der vorher eingegebenen PIN verglichen. Bei Übereinstimmung der PIN wird ein Vergleich der biometrischen Information und der Personaldaten durchgeführt.

Der Datencodierungs/Decodierungsalgorithmus und der Bildvergleichsalgorithmus sind als eine Kombination aus Hardund Software zu realisieren. Die Verbindung zwischen dem Bildvergleichsalgorithmus und dem Zutritts-, Zugangs- oder Berechtigungsmechanismus muß eine sichere bzw. vertrauenswürdige, d.h. verlust-, abhör- und verfälschungssichere Verbindung sein.

Ist der Bildvergleich erfolgreich verlaufen, wird ein entsprechendes Signal übermittelt (z.B. Türöffnen), und die Gültigkeit des Zugangsberechtigungs- oder Identifikationsmediums wird bestätigt. Die Identifizierung des Mediumbenutzers kann durch eine Person erfolgen, die das Paßfoto auf dem Medium, die Rekonstruktion des Paßfotos und die sich authentifizierende Person augenscheinlich miteinander vergleicht. Mit entsprechenden Bilderkennungsalgorithmen kann dieser optische Vergleich auch unter Einsatz einer Video- oder CCD-Kamera durchgeführt werden.

Mit weiter verbesserten Bildvergleichsalgorithmen, die auch optisch abgetastete biometrische Information verarbeiten können, ist auch eine dauernde Authentifizierung denkbar. Hierzu sind von der zu authentifizierenden Person keine zusätzlichen Handlungen notwendig. Es muß lediglich eine Video- bzw. CCD-Kamera vorgesehen sein, die ständig den Gesichtsbereich der Person aufzeichnet. Diese dauernde Authentifizierung würde eine Benutzung durch andere als den Berechtigten ausschließen.

Die Erfindung wird nachfolgend anhand eines Ausführungsbeispiels in Verbindung mit den Zeichnungen näher erläutert. Hierbei zeigen:
- Fig. 1: ein Beispiel für ein Bild und personenbezogene Daten;
- Fig. 2: einen Ausschnitt der codierten Form einer computergenerierten holographischen Information, die auf Vorder- und Rückseite des Ausweismediums aufgebracht wird;
- Fig. 3: ein Beispiel für die Vorderseite des Ausweismediums mit aufgebrachter holographischer Information in codierter Form; und
- Fig. 4: ein Beispiel für die Rückseite des Ausweismediums mit aufgebrachter holographischer Information in codierter Form.

In einem einfachen Ausführungsbeispiel wird nachfolgend der Ablauf der Erstellung eines einfachen Sicherheitsmediums, d.h. des erfindungsgemäßen Zugangsberechtigungs- oder Identifikationsmediums nach dem erfindungsgemäßen Verfahren erläutert.

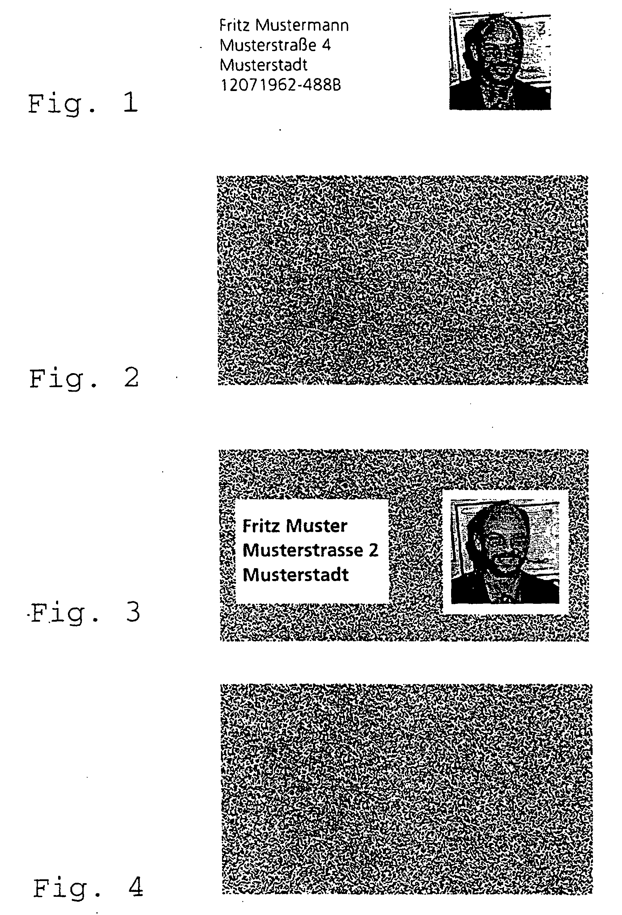

Zunächst werden das Bild der Person und die personenbezogenen Daten (beispielsweise Name, Adresse, PIN usw.) in ein digitales Format umgewandelt. Fig. 1 zeigt ein Beispiel für ein solches Bild und entsprechende personenbezogene Daten. Die digitalen Daten werden dann zur Durchführung einer Fouriertransformation aufbereitet. Die Fouriertransformation erfolgt mit Hilfe bekannter Algorithmen. Die Fouriertransformation wird durchgeführt, um das Amplituden- und Phasenspektrum des Bildes und der personenbezogenen Daten zu erhalten. Da es sich bei dem Bild um ein zweidimensionales Objekt handelt, kann als Phaseninformation in bekannter Weise eine statistische Phase einbezogen werden.

Das so erhaltene Spektrum (als holographische Information) wird als Beugungsgitter in einem Binärformat codiert.
Ein Beispiel für einen Codierungsalgorithmus ist die zellorientierte Codierung nach A.W. Lohmann (Literaturverweis B.R. Brown, A.W. Lohmann: Appl. Opt. 5, 967 (1966)).
Das als Binärformat codierte Beugungsgitter ist ein computergeneriertes Fourierhologramm. Dieses Fourierhologramm wird beispielsweise mit einem Laserbelichter oder einem Laserdrucker auf Vorder- und Rückseite des Ausweismediums aufgebracht. Einen Ausschnitt aus einem derart als Binärformat codierten Beugungsgitter zeigt Fig. 2. Die Fig. 3 und 4 zeigen ein Beispiel für Vorder- bzw. Rückseite des fertigen Ausweismediums. Der Hintergrund und die Rückseite des dort dargestellten Identifikationsmediums enthalten die als Beugungsmuster codierte holographische Information des Bildes und der Daten, die auf der Vorderseite sichtbar sind.

Im folgenden wird der Ablauf für die automatische Überprüfung der Konsistenz der Daten des Ausweismediums erläutert.

Zunächst wird mit einem Leser (Scanner) das Identifikationsmedium eingelesen. Falls die Codierung zusätzlich verschlüsselt ist, wird eine Entschlüsselung durchgeführt. Danach werden die codierten Daten des Ausweismediums zur computersimulierten Rekonstruktion des Bildes und der personenbezogenen Daten aufbereitet. Nach der Rekonstruktion der Daten erfolgt ein automatischer Vergleich der rekonstruierten Daten mit den auf dem Ausweismedium lesbar und sichtbar gespeicherten Daten. Auf diese Weise können die Konsistenz der Daten und damit die Integrität des Ausweismediums festgestellt werden.

Bei der vorliegenden Erfindung werden computergenerierte Hologramme zur automatischen oder visuellen Benutzeridentifizierung eingesetzt. Ein computergeneriertes Hologramm ist die mathematische Berechnung des Lichtenergiemusters eines beliebigen 2- oder 3-dimensionalen Objektes. Dieses mathematisch berechnete Lichtenergiemuster wird anschließend mit speziellen Kodierungsverfahren, die dem Fachmann geläufig sind, in eine optische Darstellung bzw. ein optisch erkennbares Muster umgewandelt. Dieses Muster kann beispielsweise mit einem herkömmlichen 600dpi Laserdrucker auf normale Kopierfolie aufgebracht werden. Zur Rekonstruktion der Daten ist bei der vorliegenden Erfindung keine spezielle, aufwendige Optik erforderlich. Das erzeugte Muster kann vielmehr, beispielsweise mit einem einfachen optischen Scanner, eingelesen und anschließend digital aufbereitet werden. Aus den eingelesenen Daten wird durch geeignete Rekonstruktions- bzw. Dekodierungsalgorithmen mit Hilfe eines Computers das Bild des Objektes rekonstruiert und kann dann auf einem Ausgabegerät, beispielsweise einem Bildschirm, dargestellt werden.

## Patentansprüche

1. Zugangsberechtigungs- oder Identifikationsmedium mit einer Vorder- und einer Rückseite, das computergenerierte holographische Information eines Bildes des Gesichtes einer Person in codierter Form speichert,
**dadurch gekennzeichnet,**
**daß** das Medium das Bild des Gesichtes der Person auf der Vorderseite trägt und die holographische Information als Beugungsmuster codiert auf der Vorder- und/oder Rückseite des Mediums aufgedruckt ist.

2. Zugangsberechtigungs- oder Identifikationsmedium nach Anspruch 1, **dadurch gekennzeichnet, daß** die holographische Information oder deren codierte Form zusätzlich mit einem Datenverschlüsselungsalgorithmus verschlüsselt ist.

3. Zugangsberechtigungs- oder Identifikationsmedium nach einem der Ansprüche 1 oder 2, **dadurch gekennzeichnet, daß** das Bild ein Paßfoto ist.

4. Zugangsberechtigungs- oder Identifikationsmedium nach einem der Ansprüche 1 bis 3, **dadurch gekennzeichnet, daß** das Medium weitere Daten, beispielsweise zur Person, trägt.

5. Zugangsberechtigungs- oder Identifikationsmedium nach Anspruch 4, **dadurch gekennzeichnet, daß** die weiteren Daten in der codierten Form der holographischen Information enthalten sind.

6. Zugangsberechtigungs- oder Identifikationsmedium nach einem der Ansprüche 1 bis 5, **dadurch gekennzeichnet, daß** zusätzlich ein oder mehrere PINs oder Codewörter in der codierten Form der holographischen Information enthalten sind.

7. Zugangsberechtigungs- oder Identifikationsmedium nach einem der Ansprüche 1 bis 6, **dadurch gekennzeichnet, daß** das Medium die Form einer Scheckkarte aufweist.

8. Verfahren zur Herstellung eines Zugangsberechtigungsoder Identifikationsmediums mit folgenden Schritten:
- Bereitstellen eines Mediums mit Vorder- und Rückseite;
- Aufbringen des Bildes einer Person auf die Vorderseite;
- Computergenerieren einer holographischen Information des Bildes;
- Codieren der holographischen Information als Beugungsmuster; und
- Aufdrucken der codierten Form der holographischen Information auf die Vorder- und/oder Rückseite des Mediums,
wobei der Schritt des Aufbringens des Bildes an beliebiger Stelle im Verfahrensablauf erfolgen kann.

9. Verfahren zur Identifizierung oder Überprüfung der Zugangsberechtigung einer Person mit Hilfe des Mediums aus einem der Ansprüche 1 bis 7, bei dem die Übereinstimmung eines auf dem Medium vorhandenen Bildes des Gesichtes einer Person mit dem Inhaber des Mediums überprüft wird, mit folgenden weiteren Schritten:
- Einlesen der codierten Form der auf dem Medium gespeicherten holographischen Information;
- Rekonstruktion des Bildes aus den eingelesenen Daten;
- Vergleich des rekonstruierten Bildes mit dem auf dem Medium angebrachten sichtbaren Bild; und
- Verweigern der Zugangsberechtigung oder Abbruch des Identifikationsvorgangs, falls die beiden Bilder nicht übereinstimmen.

10. Verfahren nach Anspruch 9, **dadurch gekennzeichnet, daß** der Vergleich automatisch mit Hilfe einer Kamera und eines Bilderkennungsalgorithmus erfolgt.

11. Verfahren nach Anspruch 9 oder 10, **dadurch gekennzeichnet, daß** aus der codierten Form der holographischen Information weitere Daten extrahiert werden.

12. Verfahren nach Anspruch 11, **dadurch gekennzeichnet, daß** die Person eine PIN oder ein Codewort eingeben muß, die mit einer/einem aus der codierten Form der holographischen Information extrahierten PIN bzw. Codewort verglichen wird.

## Claims

1. An access authorization medium or identification medium having a front side and a rear side which stores computer-generated holographic information of a picture of a person's face in coded form,
**characterized by** said medium bearing said picture of the face of a person on said front side and said holographic information coded as a diffraction pattern being printed on said front and/or rear side of said medium.

2. An access authorization medium or identification medium according to claim 1, **characterized by** said holographic information or said coded form thereof being additionally enciphered using a data enciphering algorithm.

3. An access authorization medium or identification medium according to one of the claims 1 or 2, **characterized by** said picture being a passport photograph.

4. An access authorization medium or identification medium according to one of the claims 1 to 3, **characterized by** said medium bearing additional data, for example, relating to the person.

5. An access authorization medium or identification medium according to claim 4, **characterized by** said additional data being contained in said coded form of said holographic information.

6. An access authorization medium or identification medium according to one of the claims 1 to 5, **characterized by** in addition one or several PINs or code words being contained in said coded form of said holographic information.

7. An access authorization medium or identification medium according to one of the claims 1 to 6, **characterized by** said medium having the form of a check card.

8. A process for the fabrication of an access authorization medium or identification medium having the following steps:
• preparation of a medium having a front and rear side;
• placement a picture of a person on said front side;
• computer-generation of a holographic information of said picture;
• encoding said holographic information as a diffraction pattern; and
• printing of said coded form of said holographic information on said front and/or rear side of said medium,
with said step of placement of said picture being able to occur in any step during the course of said process.

9. A process for identification or verification of the access authorization of a person with the aid of said medium of one of the claims 1 to 7, in which the concurrence of the picture of a person's face on said medium with the owner of said medium is checked, having the following steps:
• reading in said coded form of said holographic information stored on said medium;
• reconstruction of said picture from said read-in data;
• comparison of said reconstructed picture with said visible picture provided on said medium; and
• rejection of said access authorization or termination of said identification procedure if the two pictures do not match.

10. A process according to claim 9, **characterized by** said comparison occurring automatically with the aid of a camera and an image recognition algorithm.

11. A process according to claim 9 or 10, **characterized by** additional data being extracted from said coded form of said holographic information.

12. A process according to claim 11, **characterized by** a person having to enter a PIN or a code word which is compared with a PIN respectively code word extracted from said coded form of said holographic information.

## Revendications

1. Moyen du droit d'accès ou de l'identification, à un côté de face et à un côté arrière, qui mémorise de l'information holographique, engendrée par ordinateur, d'une image de la face d'une personne sous forme codée,
**caractérisé en ce que** le moyen porte l'image de la face de la personne sur le côté de face et que l'information holographique est imprimée sur le côté de face et/ou arrière du moyen sous forme d'une figure de diffraction codée.

2. Moyen du droit d'accès ou de l'identification selon la revendication 1,
**caractérisé en ce que** ladite information holographique ou sa forme codée est chiffrée de manière supplémentaire moyennant un algorithme de codage de données.

3. Moyen du droit d'accès ou de l'identification selon une quelconque des revendications 1 ou 2, **caractérisé en ce que** ladite image est un photo de passeport.

4. Moyen du droit d'accès ou de l'identification une quelconque des revendications 1 à 3, **caractérisé en ce que** le moyen porte des données supplémentaires, par exemple des données personnelles.

5. Moyen du droit d'accès ou de l'identification selon la revendication 4, **caractérisé en ce que** lesdites données supplémentaires sont y contenues sous la forme codée de l'information holographique.

6. Moyen du droit d'accès ou de l'identification selon une quelconque des revendications 1 à 5, **caractérisé en ce qu'**au plus ladite forme codée de l'information holographique contient un ou plusieurs numéros d'identification personnelles ou mots codes.

7. Moyen du droit d'accès ou de l'identification selon une quelconque des revendications 1 à 6, **caractérisé en ce que** le moyen présente la forme d'une carte bancaire.

8. Procédé à fabriquer un moyen du droit d'accès ou de l'identification, comprenant les opérations suivantes :
- disposition d'un moyen à un côté de face et un côté arrière ;
- application de l'image d'une personne sur le côté de face ;
- création par ordinateur d'une information holographique de l'image ;
- codage de l'information holographique sous forme d'une figure de diffraction ; et
- impression de la forme codée de l'information holographique sur le côté de face et/ou arrière du moyen,
il étant possible de réaliser l'étape de l'application de l'image à tout point quelconque dans le déroulement de l'opération.

9. Procédé d'identification ou vérification du droit d'accès d'une personne moyennant le moyen selon une quelconque des revendications 1 à 7, dans lequel la conformité d'une image de la face d'une personne, qui existe sur le moyen, avec le porteur du moyen est vérifiée, comprenant les opérations ultérieures suivantes :
- lire ladite forme codée de l'information holographique mémorisée sur le moyen ;
- reconstruire l'image à partir des données lues ;
- comparer l'image reconstruite avec l'image visible, qui est appliquée sur le moyen ; et
- refuser l'autorisation d'accès ou troncature de la procédure d'identification si les deux images ne sont pas en conformité.

10. Procédé selon la revendication 9, **caractérisé en ce que** la comparaison se fait de manière automatisée moyennant une caméra et un algorithme d'analyse d'images.

11. Procédé selon la revendication 9 ou 10, **caractérisé en ce que** des données ultérieures sont extraites de ladite forme codée de l'information holographique.

12. Procédé selon la revendication 11, **caractérisé en ce que** la personne doit entrer un numéro d'identification personnelle ou un mot code, qui est comparé avec le numéro d'identification personnelle ou respectivement le mot code, qui sont extraits de ladite forme codée de l'information holographique.
